# EUROPÄISCHE PATENTANMELDUNG

(11) **EP 1 151 708 A1**
(43) Veröffentlichungstag der Anmeldung: **07.11.2001**
(21) Anmeldenummer: 01110207.6
(22) Anmeldetag: 25.04.2001
(51) Int. Cl.: A47J 42/56

(54) **Bearbeitungsbehälter für Nahrungsmittel**

(30) Priorität: 06.05.2000 DE 10022130
(71) Anmelder: Braun GmbH, 61476 Kronberg (DE)
(72) Erfinder: Safont, Vicenc, 08039 Montgat, (Barcelona) (ES); Penaranda, Mariano, 08005 Barcelona (ES); Román, José Luis, 08960 Sant Just Desvern, (Barcelona) (ES)

(57) **Zusammenfassung**

Ein Bearbeitungsbehälter (1) für Nahrungsmittel mit einem abnehmbaren Behälterdeckel (4) und einer im Behälterinneren angeordneten Werkzeugwelle (6), an der Bearbeitungswerkzeuge (7) angeordnet sind, wobei in der als Hohlzylinder ausgebildeten Werkzeugwelle (6) eine Werkzeugbremse ausgebildet ist, die einen Lagerblock (8), einen längsverschiebbaren Kolben (9) und eine Feder (10) aufweist, zeichnet sich dadurch aus, daß die Werkzeugwelle (6) oberhalb der Bearbeitungswerkzeuge (7) Reinigungsöffnungen (30) aufweist. Hierdurch wird ein Bearbeitungsbehälter für Nahrungsmittel zur Verfügung gestellt, bei dem die Wellenhohlräume des Bremsmechanismus zu Reinigungszwecken einfach zugänglich sind. Dabei ist der Bearbeitungsbehälter einfach und kostengünstig herstellbar.

## Beschreibung

Die Erfindung betrifft einen Bearbeitungsbehälter für Nahrungsmittel gemäß dem Oberbegriff des Patentanspruchs 1.

Aus der EP-0 221 392 B1 ist ein Zerkleinerungsgerät zum Zerkleinern von beispielsweise Petersilie, Zwiebeln, etc. bekannt, das aus einem Deckel und einem vom Deckel verschließbaren Behälter gebildet wird. Der Deckel weist eine erste und eine zweite Kupplung als Kupplungsvorrichtung auf, die durch eine Getriebeanordnung miteinander verbunden sind. Die im Behälter befindliche zweite Kupplung ist mit einem im Behälter rotierbaren Messer drehbar verbindbar. Zum Antrieb des Messers wird die erste Kupplung mit dem Arbeitswerkzeug einer Küchenmaschine, beispielsweise mit dem Messer eines Stabmixers, in Eingriff gebracht, so daß nach Einschalten des Stabmixers das rotierende Arbeitswerkzeug die erste Kupplung in Drehung versetzt und dadurch über das Getriebe und die zweite Kupplung das im Behälter befindliche Messer ebenfalls rotiert. Wird der Stabmixer von der ersten Kupplung entfernt und auf diese Weise der Antrieb zu dem im Behälter des Zerkleinerungsgerätes vorgesehenen Messers unterbrochen, so läuft dieses aufgrund seiner Massenträgheit noch längere Zeit nach und dies insbesondere dann, wenn sich keine Nahrungsmittel im Behälter befinden. Dies kann zu Verletzungen einer Hand einer Bedienungsperson führen, wenn diese bei noch rotierendem Messer den Deckel von dem Behälter abhebt und in das Behälterinnere eingreift, um das Messer aus dem Behälter zu entfernen.

Ferner ist aus der EP 0 529 287 B1 ein Zerkleinerungsgerät für eine elektrische Küchenmaschine bekannt. Darin ist eine Werkzeugwelle über eine Kupplungsvorrichtung mit einer Antriebswelle verbindbar. Zwischen der Kupplungsvorrichtung und dem Arbeitswerkzeug ist bei diesem Stand der Technik in der Werkzeugwelle eine Bremse ausgebildet, die von einer Feder gesteuert werden kann. Dabei verschiebt die Feder die Werkzeugwelle nach dem Entkoppeln in axialer Richtung, bis am Innenumfang der hohlen Werkzeugwelle angebrachte Bremselemente mit entsprechenden Bremselementen am unteren Wellenlager zusammenwirken und die Werkzeugwelle dadurch abgebremst wird.

Schließlich beschreibt die EP 0 856 273 B1 einen Arbeitsbehälter mit Deckel, in dem ein Bearbeitungswerkzeug an einer Werkzeugwelle angeordnet ist. Die Werkzeugwelle ist am Behälterboden und am Deckel drehbar gelagert. Dabei ist im Deckelbereich eine Kupplungsanordnung zum Antrieb der Werkzeugwelle vorgesehen. In der Werkzeugwelle ist eine über eine Feder ansteuerbare Bremse vorgesehen, die nach Entfernen des Behälterdeckels die Drehbewegung des Bearbeitungswerkzeuges stoppt. Die Bremse wirkt dabei durch Verschieben der Werkzeugwelle in Wellenlängsrichtung, so daß an einem Lagerzapfen angeordnete Vorsprünge in entsprechende Vertiefungen an einer Lagerung eingreifen.

Bei allen genannten Vorrichtungen vom Stand der Technik können Nahrungsmittelreste in die Hohlräume im Welleninneren eindringen und den Bremsmechanismus verschmutzen. Da die hiervon betroffenen Hohlräume zu Reinigungszwecken nur sehr schwer zugänglich sind, können dort Bakterien und Keime entstehen, was bei der Zubereitung von Nahrungsmitteln äußerst unerwünscht ist.

Der vorliegenden Erfindung liegt daher die Aufgabe zugrunde, einen verbesserten Bearbeitungsbehälter für Nahrungsmittel zur Verfügung zu stellen, bei dem die Wellenhohlräume des Bremsmechanismus zu Reinigungszwecken einfach zugänglich sind. Dabei soll der Bearbeitungsbehälter einfach und kostengünstig herstellbar sein.

Diese Aufgabe wird durch einen Bearbeitungsbehälter für Nahrungsmittel mit den Merkmalen des Patentanspruchs 1 gelöst. Vorteilhafte Ausgestaltungen der Erfindung werden in den Unteransprüchen beschrieben.

Die erfindungsgemäße Ausführungsform des Bearbeitungsbehälters für Nahrungsmittel gemäß Patentanspruch 1 stellt einen verbesserten Bearbeitungsbehälter für Nahrungsmittel zur Verfügung, bei dem die Wellenhohlräume des Bremsmechanismus zu Reinigungszwekken einfach zugänglich sind. Dabei ist der Bearbeitungsbehälter einfach und kostengünstig, beispielsweise aus Kunststoff, herstellbar.

Die Reinigungsöffnungen können dabei als zwei gegenüberliegende, rechteckige Ausschnitte in der Wellenwandung ausgebildet sein. Im unteren Bereich schließen die Reinigungsöffnungen mit dem Lagerblock ab, der eine Durchgangsbohrung zur Aufnahme eines starr mit dem Behälterboden verbundenen Lagerzapfen aufweist. Im Betriebszustand stützt sich die Unterseite des Kolbens auf dem kugelförmig ausgebildeten oberen Ende des Lagerzapfens ab. Das heißt, der Lagerblock wirkt mit dem Lagerzapfen als unteres Wellenlager für die Werkzeugwelle zusammen. Dabei bleibt die Werkzeugwelle längsverschieblich. Durch Abnahme des Behälterdeckels drückt die unter Spannung stehende Feder über den Kolben die Welle nach oben. Dadurch können seitlich am oberen Ende des Lagerzapfens hervorstehende Vorsprünge in an der Durchgangsbohrung des Lagerzapfens angeformte Längsschlitze eingreifen. Die Werkzeugswelle kommt sofort zum Stehen.

Durch die vorteilhafte Ausgestaltung der vorliegenden Erfindung mit den Merkmalen des Anspruchs 2, wird bei entspannter Feder Flüssigkeitsdurchgang zwischen dem Auflagering für die Feder und dem über den Dichtungszylinder gelegenen Ringraum ermöglicht. In diesem Zustand befindet sich nämlich der Dichtungszylinder etwa in der Mitte der Reinigungsöffnung, d.h. oberhalb des Dichtungszylinders kann Flüssigkeit in den Federhohlraum gelangen und unterhalb des Dichtungszylinders kann Flüssigkeit in die Durchgangsbohrung des Lagerblocks fließen. Der Reinigungsvorgang findet dabei typischerweise bei entnommener Werkzeugwelle statt. Dabei wird im folgenden mit _{"}oben" in Richtung der Wellenkupplung und mit _{"}unten" in Richtung der Bearbeitungswerkzeuge bezeichnet.

Eine weitere vorteilhafte Ausgestaltung des erfindungsgemäßen Bearbeitungsbehälters sieht die Merkmale des Patentanspruchs 3 vor. Die Stege erfüllen dabei eine Doppelfunktion. Zum einen dienen sie der Verbindung des Auflagerings mit der Kolbenachse und zum anderen dienen die nach oben überstehenden Stege der Zentrierung der Schraubenfeder. Ferner läßt sich der Kolben durch eine entsprechende Ausgestaltung beispielsweise als einstückiges Kunststoffbauteil ausgestalten. Zwischen den Stegen sind Hohlräume gebildet, die einen Flüssigkeitsdurchgang erlauben.

Die vorteilhafte Ausgestaltung mit den Merkmalen des Patentanspruchs 4 ermöglicht ein problemloses Entlanggleiten des Kolbens an der Innenwand der Werkzeugwelle. Insbesondere wird hierdurch ein Verkanten des Kolbens vermieden. Außerdem verleihen derartige Führungselemente dem von den Stegen gehaltenen Auflagering zusätzliche Stabilität.

Durch die vorteilhafte Ausgestaltung des erfindungsgemäßen Bearbeitungsbehälters mit den Merkmalen des Patentanspruchs 5 wird gewährleistet, daß auch bei entnommener Werkzeugwelle ein Reinigen der Durchgangsbohrung des Lagerblocks problemlos möglich ist, d.h., daß die Durchgangsbohrung im Lagerblock nicht vom Dichtungszylinder des Kolbens verdeckt wird. Flüssigkeit kann dabei durch die zwischen den Fortsätzen und dem Lagerblock vorhandene Öffnung fließen. Auf den am Lagerblock angeformten Fortsätzen stützt sich dabei der Dichtungszylinder des Kolbens ab. Die Feder ist in diesem Zustand entspannt, d.h. auf den Kolben wird über den Auflagering nur ein geringer Federdruck übertragen, der aber groß genug ist, um den Kolben in seiner Position zu fixieren.

Eine weitere vorteilhafte Ausführungsform der vorliegenden Erfindung sieht die Ausgestaltung des Bearbeitungsbehälters mit den Merkmalen des Patentanspruchs 6 vor. Hierdurch wird ein Eindringen von Lebensmittelrückständen in den Federhohlraum während des Betriebs vermieden. Ein Verschließen der Reinigungsöffnungen ist daher nicht erforderlich. Dies vereinfacht die Konstruktion der Werkzeugwelle. Eine vorteilhafte Weiterbildungen sieht dabei die Merkmale des Patentanspruchs 7 vor. Die Dichtungswirkung wird in diesem Fall dabei durch eine Passung zwischen dem Außenumfang des Dichtungszylinder und den Innenumfang der Werkzeugwelle erzeugt.

Noch eine vorteilhafte Ausführungsform der vorliegenden Erfindung sieht die Merkmale des Patentanspruchs 9 vor. Dabei stützt sich der Kugelkopf des Lagerzapfens in der konkaven Vertiefung der Unterseite des Dichtungszylinders ab.

Schließlich ist es vorteilhaft, wenn eine Materialwahl entsprechend Patentanspruch 8 getroffen wird. Der thermoplastische Kunststoff kann zum Beispiel Polyäthylen oder Polyamid oder aber Polypropylen sein.

Weitere Ausgestaltungen und Vorteile der Erfindung werden durch die Beschreibung der Ausführungsbeispiele unter Bezugnahme auf die beigefügten Zeichnungen erläutert. Darin zeigen:
- Fig. 1: eine vorteilhafte Ausführungsform der vorliegenden Erfindung im Schnitt;
- Fig. 2: die vorteilhafte Ausführungsform aus Fig. 1 mit abgenommenem Deckel im Schnitt;
- Fig. 3: die Werkzeugwelle gemäß der vorteilhaften Ausführungsform nach Fig. 1 als perspektivische Einzelteildarstellung;
- Fig. 4: den Kolben gemäß der vorteilhaften Ausführungsform nach Fig. 1 als perspektivische Einzelteildarstellung;
- Fig. 5: den Lagerblock gemäß der vorteilhaften Ausführungsform nach Fig. 1 als perspektivische Einzelteildarstellung;
- Fig. 6: die Werkzeugwelle gemäß der vorteilhaften Ausführungsform nach Fig. 1 als Einzelteildarstellung im Schnitt.

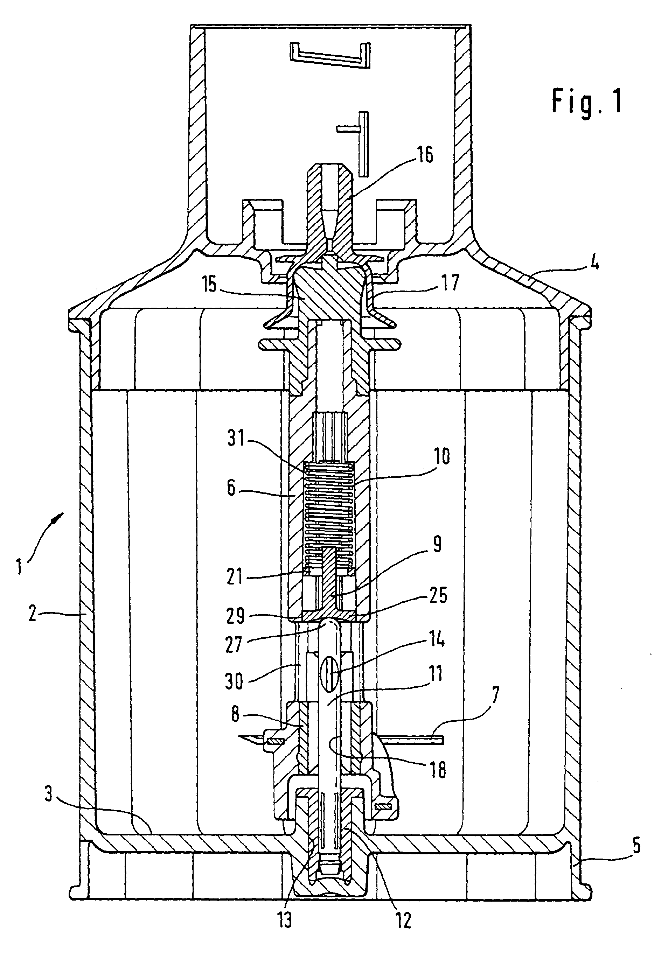

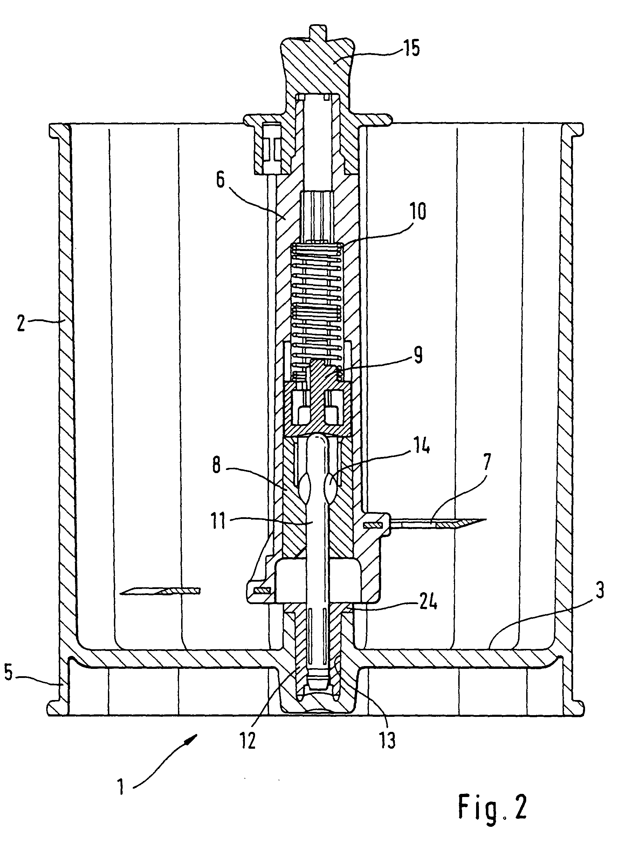

Fig. 1 bis 6 zeigen Gesamt- und Einzelteildarstellungen einer bevorzugten Ausführungsform der vorliegenden Erfindung. Dabei zeigen Fig. 1 und 2 einen im wesentlichen zylindrischen Bearbeitungsbehälter 1, der eine Behälterwand 2 und einen Behälterboden 3 aufweist, welcher im vorliegenden Fall aus durchsichtigem Kunststoffmaterial hergestellt ist. Der Bearbeitungsbehälter 1 steht auf einem Behälterfuß 5 auf, der mit dem Behälterkörper einstückig verbunden ist.

Der Bearbeitungsbehälter 1 ist im betriebsbereiten Zustand an seinem oberen Ende durch einen Behälterdeckel 4 verschlossen, wie in Fig. 1 dargestellt. Der Behälterdeckel 4 ist dabei leicht kegelförmig ausgebildet und weist in seinem Zentrum einen zylinderförmigen Fortsatz auf. In diesem Fortsatz ist eine Antriebswelle 16 aufgenommen. Die Antriebswelle 16 treibt eine Kupplungsaufnahme 17 an, die in eine Kupplung 15 am oberen Ende der Werkzeugwelle 6 eingreift.

Konzentrisch zur Antriebswelle 16 ist im Behälterboden 3 ein Lagerzapfen 11 aus Metall angeordnet. Der zylinderförmige Lagerzapfen 11 ist dabei von einer Lagerzapfenbuchse 12 aus Kunststoff aufgenommen, die wiederum in einer Buchsenaufnahme 13, die in den Behälterboden 3 geformt ist, gehalten wird.

Fig. 2 zeigt den Bearbeitungsbehälter 1 ohne Behälterdeckel 4 in geschnittener Darstellung. Die Aufnahme des Lagerzapfens 11 im Behälterboden 3 erfolgt dabei, wie bereits erwähnt, über eine Lagerzapfenbuchse 12. Der Lagerzapfen 11 ist im vorliegenden Fall aus Stahl hergestellt und ist an seinem oberen Ende halbkugelförmig abgerundet. Ferner weist der Lagerzapfen 11 im oberen Drittel zwei halbkreisförmig ausgebildete Stege 14 auf. Der Lagerzapfen 11 ist in einer aus Kunststoff hergestellten Lagerzapfenbuchse 12 aufgenommen, die wiederum in einer in dem Behälterboden 3 des Bearbeitungsbehälters 1 eingeformten Buchsenaufnahme 13 angebracht und daran verklebt ist. Die Lagerzapfenbuchse 12 weist dabei an ihrem oberen Ende einen umlaufenden Bund 24 auf.

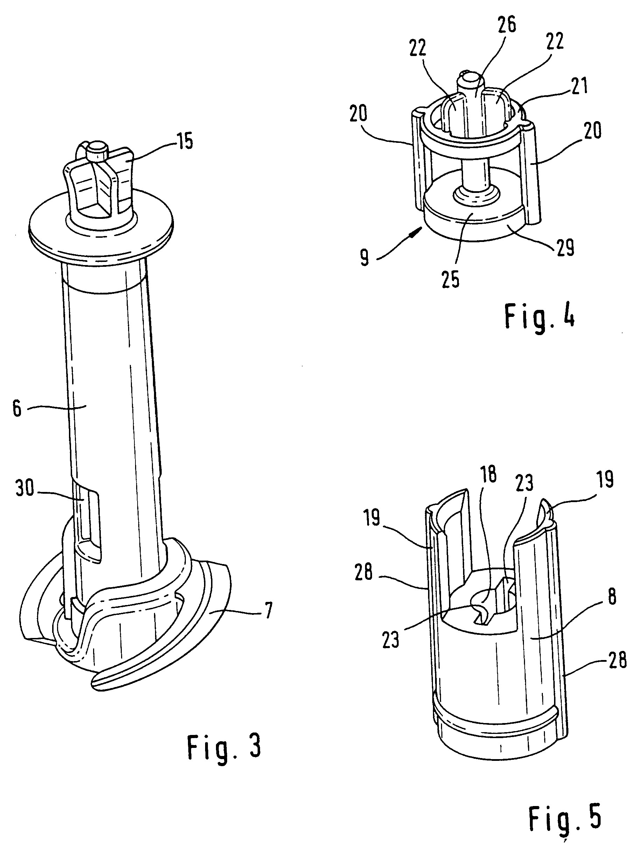

Zwischen der Kupplungsaufnahme 17 und dem Lagerzapfen 11 ist eine Werkzeugwelle 6 aufgenommen, die in den Fig. 3 als perspektivische Einzelteildarstellung gezeigt ist. Die Werkzeugwelle 6 weist an ihrem oberen Ende eine Kupplung 15 auf, die mit ihren kreuzförmig angeordneten Stegen in entsprechende Aussparungen der Kupplungsaufnahme 17 eingreift. Die Kupplung 15 schließt mit einem umlaufenden Bund ab. Unterhalb der Kupplung 15 erstreckt sich die Werkzeugwelle 6 im wesentlichen als glatte Zylinderfläche. Außerdem ist am unteren Ende der Werkzeugwelle 6 ein Bearbeitungswerkzeug 7 angeordnet, welches im vorliegenden Ausführungsbeispiel aus zwei sichelförmigen Schneiden besteht. Oberhalb des Bearbeitungswerkzeuges 7 weist die Werkzeugwelle 6 zwei gegenüberliegende Reinigungsöffnungen 30 auf. Die Reinigungsöffnungen sind im wesentlichen als rechteckförmige Öffnungen mit abgerundeten Ecken ausgebildet

Die Werkzeugwelle 6 ist als Hohlwelle ausgebildet, wie den Darstellungen in Fig. 1 2 und 6 zu entnehmen ist. Sie ist im vorliegenden Fall aus einem geeigneten thermoplastischen Kunststoff hergestellt. Am unteren Ende der Werkzeugwelle 6 ist oberhalb des Bearbeitungswerkzeuges 7 ein Lagerblock 8 angeordnet. Dieser ist im wesentlich zylinderförmig ausgestaltet und weist eine Durchgangsbohrung 18 zur Aufnahme eines Lagerzapfens 11 auf. Die Durchgangsbohrung 18 weist ferner gegenüberliegende Längsschlitze 23 zur Aufnahme von Vorsprüngen 14 des Lagerzapfens 11 auf. Am oberen Ende des Lagerblocks 8 ist eine quaderförmige Ausnehmung vorhanden, wodurch der Lagerblock 8 zwei seitliche Fortsätze 19 aufweist. Der Lagerblock 8 ist in seiner Position am unteren Ende der Werkzeugwelle 6 fixiert und dient zusammen mit dem Lagerzapfen 11 als Gleitlager.

Oberhalb des Lagerblocks 8 ist ein axialverschiebbarer Kolben 9 in der Werkzeugwelle 6 angeordnet. Dieser ist in Fig. 4 als Einzelteil dargestellt.

Fig. 4 zeigt eine perspektivische Einzelteildarstellung des Kolbens 9, der innerhalb der Werkzeugwelle 6 axial verschiebbar gelagert ist. Dabei wird der im wesentlichen zylindrisch ausgestaltete Kolben 9 durch seitliche aixial ausgerichtete Führungsschienen 20 geführt. Ferner weist der Kolben 9 an seinem oberen Ende einen umlaufenden Auflagering 21 auf, auf dem sich eine Feder 10 abstützen kann. Die Feder 10 wird dabei durch Stege 22 zentriert.

Der Auflagering 21 ist von einem am unteren Ende des Kolbens 9 angeordneten Dichtungszylinder 25 durch eine Kolbenachse 26 beabstandet, deren Durchmesser wesentlich geringer ist als der Durchmesser des Dichtungszylinders 25 und des Auflagerings 21. Der Dichtungszylinder 25 ist dabei an seinem Umfang als Dichtfläche 29 ausgebildet und weist an seinem unteren Ende eine konkav nach innen gewölbte Fläche auf, an der sich der Kugelkopf 27 des Lagerzapfen 11 abstützen kann. Der Außenumfang des Dichtungszylinders 25 ist dabei , wie erwähnt, als Dichtfläche 29 ausgebildet und wirkt als solche mit den Innenumfang der Werkzeugwelle 6 oberhalb der Reinigungsöffnungen 30 zusammen.

Oberhalb des Kolbens 9 ist eine als Druckfeder ausgebildete Schraubenfeder 10 in der Werkzeugwelle 6 angeordnet. Diese stützt sich an ihrem oberen Ende an der Werkzeugwelle und an ihrem unteren Ende am Auflagering 21 des Kolbens 9 ab.

Die Feder 10, der Kolben 9, der Lagerblock 8 und der Lagerzapfen 11 bilden zusammen den Bremsmechanismus, der die Drehung der Werkzeugwelle 6 bei Abnahme des Behälterdekkels abbremst.

Im betriebsbereiten Zustand gemäß Fig. 1 wird durch den Behälterdeckel 4 und die Kupplungsaufnahme 17 Druck auf die Schraubenfeder 10 ausgeübt. Die Feder 10 ist komprimiert, da zum einen Druck vom oberen Ende der Werkzeugwelle 6 auf sie ausgeübt wird und zum anderen Druck vom Kolben 9 von unten ausgeübt wird. Der Kolben 9 sitzt dabei auf dem Kugelkopf 27 des Lagerzapfens 11 auf, der in der konkaven Vertiefung des Dichtungszylinders 25 aufgenommen ist. Dabei erstreckt sich der Lagerzapfen 11 durch die Durchgangsbohrung 18 des Lagerblocks 8. Der Lagerzapfen 11 weist an seinem oberen Abschnitt radial hervorstehende Vorsprünge 14 auf, die halbkreisförmig ausgebildet sind und im Betriebszustand frei liegen.

Ferner zeigt Fig. 1 den Dichtungszustand, in dem sich der Dichtungszylinder 25 mit der Wandung der Werkzeugwelle 6 befindet. Hierdurch kann keine Verschmutzung in den Federhohlraum 31 gelangen.

Im gebremsten Zustand gemäß Fig. 2 ist der Behälterdeckel 4 abgenommen und die Schraubenfeder 10 in entspannter Stellung gezeigt, d.h. die Werkzeugwelle 6 ist von der Schraubenfeder 10 nach oben gedrückt worden. Hierdurch geraten die am Lagerzapfen 11 angeordneten Vorsprünge 14 in Eingriff mit den am Lagerblock 8 angeordneten Längsschlitzen 23. Dies bremste die Nachdrehbewegung des Bearbeitungswerkzeugs 7 abrupt ab.

Im Betrieb drehen sich die als sichelförmige Schneiden ausgebildeten Bearbeitungswerkzeuge 7 mit einer hohen Drehzahl, so daß auch feine Nahrungsmittel, wie beispielsweise Schnittlauch, sauber zerteilt werden können. Während des gesamten Betriebs ist dabei der Behälterdeckel 4 geschlossen. Sobald der Behälterdeckel 4 abgehoben wird, entkoppelt die Kupplungsaufnahme 17 und die Kupplung 15, so daß keine Antriebsleistung mehr auf die Werkzeugwelle 6 übertragen wird. Aufgrund der Massenträgheit besteht das Bestreben der Werkzeugwelle 6, dennoch mit erheblicher Geschwindigkeit weiter zu drehen. Um dieses Bestreben zu unterbinden und dadurch die Gefahr von Verletzungen, beispielsweise durch ein verfrühtes Hineingreifen in den Bearbeitungsbehälter, zu vermeiden, wird die Werkzeugwelle 6 sofort durch den durch die Feder 10, den Kolben 9, den Lagerblock 8 und den Lagerzapfen 11 gebildeten Bremsmechanismus abgebremst.

Die Werkzeugwelle 6 wird bei Abnahme des Behälterdeckels 4 durch die Feder 10 nach oben in Längsrichtung verschoben. Hierdurch gleitet auch der Lagerblock 8 nach oben und die am Lagerzapfen 11 angeordneten Vorsprünge 14 gelangen hierdurch in Eingriff mit den an der Durchgangsbohrung 18 des Lagerblocks 8 angebrachten Längsschlitzen 23. Die Werkzeugwelle 6 und damit die Bearbeitungswerkzeuge 7 kommen hierdurch sofort zum Stehen.

Fig. 3 zeigt eine perspektivische Einzelteildarstellung der Werkzeugwelle 6. Darin ist eine am oberen Ende der Werkzeugwelle 6 als kreuzförmige Stege ausgebildete Kupplung 15 dargestellt. Am unteren Ende der Werkzeugwelle 6 sind die Bearbeitungswerkzeuge 7 dargestellt. Oberhalb der Bearbeitungswerkzeuge 7 sind Reinigungsöffnungen 30 angeordnet.

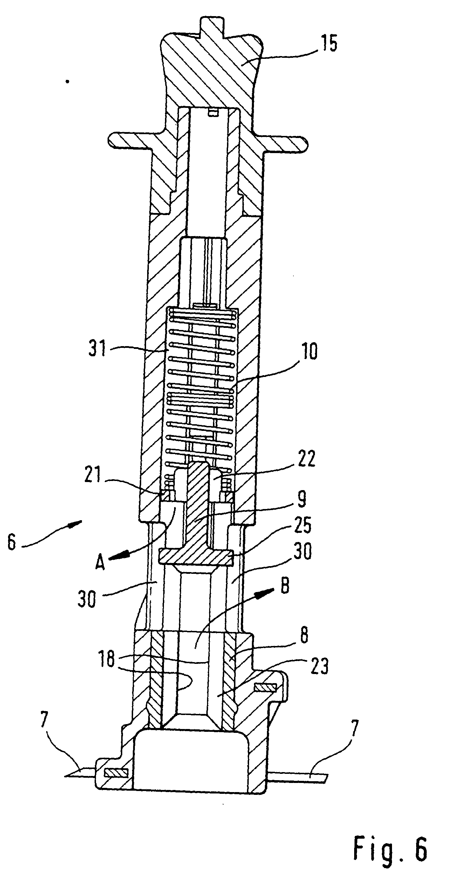

Der in Fig. 5 perspektivisch als Einzelteil dargestellte Lagerblock 8 weist einen zylindrischen Vollkörper mit einer zentrisch angeordneten Durchgangsbohrung zur Aufnahme eines Lagerzapfens 11 auf. An seinem oberen Ende weist der Lagerblock 8 zwei klauenförmige Fortsätze 19 auf. Der Lagerblock 8 weist ferner Längsschlitze 23 auf, die sich seitlich von der Durchgangsbohrung 18 erstrecken. Die Fortsätze 19 sind dadurch gebildet, daß aus dem im wesentlichen zylindrischen Lagerblock 8 an dessen oberen Ende eine quaderförmige Ausnehmungen gebildet ist. Am Außenumfang des Lagerblocks 8 sind in axialer Richtung Führungsschienen 28 gebildet, um den Lagerblock 8 gegen Verdrehen innerhalb der Werkzeugwelle 6 zu sichern. Die quaderförmige Ausnehmung, die seitlich durch die Fortsätze 19 begrenzt wird, deckt sich mit den an der Werkzeugwelle 6 vorhandenen Reinigungsöffnungen 30.

Fig. 6 zeigt eine geschnittene Einzelteildarstellung der Werkzeugwelle 6 im Reinigungszustand, d.h. wenn sie aus dem Bearbeitungsbehälter entnommen ist. Am oberen Ende der Werkzeugwelle 6 ist die Kupplung 15 erkennbar. Am unteren Ende der Werkzeugwelle 6 sind die Bearbeitungswerkzeuge 7 angeordnet. Oberhalb der Bearbeitungswerkzeuge 7 sind die Reinigungsöffnungen 30 angebracht. Ferner ist der Lagerblock 8 im Schnitt dargestellt. Der Kolben 9 befindet sich mit seinem Dichtungszylinder 25 im mittleren Bereich der Reinigungsöffnungen 30. Dabei sitzt der Dichtungszylinder 25 auf den Fortsätzen 19 des Lagerblocks 8 auf.

Oberhalb des Dichtungsrings 25 ist der Auflagering 21 angeordnet. Am Auflagering 21 stützt sich die entspannte Schraubenfeder 10 ab. In dieser Stellung ist der Federhohlraum 31 mit Wasser durchspülbar, wie durch Pfeil A in Fig. 6 angedeutet. Ferner kann Wasser durch die Reinigungsöffnungen 30 und die Durchgangsbohrung 18 hindurchlaufen, wie durch Pfeil B angedeutet.

## Patentansprüche

1. Bearbeitungsbehälter (1) für Nahrungsmittel mit einem abnehmbaren Behälterdeckel (4) und einer im Behälterinneren angeordneten Werkzeugwelle (6), an der Bearbeitungswerkzeuge (7) angeordnet sind, wobei in der als Hohlzylinder ausgebildeten Werkzeugwelle (6) eine Werkzeugbremse ausgebildet ist, die einen Lagerblock (8), einen längsverschiebbaren Kolben (9) und eine Feder (10) aufweist,
**dadurch gekennzeichnet,**
**daß** die Werkzeugwelle (6) oberhalb der Bearbeitungswerkzeuge (7) Reinigungsöffnungen (30) aufweist.

2. Bearbeitungsbehälter (1) für Nahrungsmittel nach Anspruch 1,
**dadurch gekennzeichnet,**
**daß** der Kolben (9) an seinem unteren Ende einen Dichtungszylinder (25) und an seinem oberen Ende einen Auflagering (21) aufweist, die durch eine Kolbenachse (26) voneinander beabstandet sind.

3. Bearbeitungsbehälter (1) für Nahrungsmittel nach Anspruch 2,
**dadurch gekennzeichnet,**
**daß** von der Kolbenachse (26) radial Stege (22) hervorstehen, die mit dem Auflagering (21) verbunden sind.

4. Bearbeitungsbehälter (1) für Nahrungsmittel nach einem der vorangehenden Ansprüche,
**dadurch gekennzeichnet,**
**daß** am Kolben (9) ferner seitlich hervorstehende Führungsschienen (20) ausgebildet sind.

5. Bearbeitungsbehälter (1) für Nahrungsmittel nach einem der vorangehenden Ansprüche,
**dadurch gekennzeichnet,**
**daß** der Lagerblock (8) in seinem oberen Bereich Fortsätze (19) aufweist, auf denen der Dichtungszylinder (25) des Kolben (9) im gebremsten Zustand aufliegt.

6. Bearbeitungsbehälter (1) für Nahrungsmittel nach einem der vorangehenden Ansprüche,
**dadurch gekennzeichnet,**
**daß** der im oberen Bereich der Werkzeugwelle (6) gebildete Federhohlraum (31) im Betriebszustand durch den Dichtungszylinder (25) des Kolbens (9) flüssigkeitsdicht verschlossen ist.

7. Bearbeitungsbehälter (1) für Nahrungsmittel nach Anspruch 6,
**dadurch gekennzeichnet,**
**daß** der Dichtungszylinder (25) des Kolbens (9) an seinem Außenumfang eine Dichtfläche (29) aufweist.

8. Bearbeitungsbehälter (1) für Nahrungsmittel nach einem der vorangehenden Ansprüche,
**dadurch gekennzeichnet,**
**daß** der am Kolben (9) angeordnete Dichtungszylinder (25) an seiner Unterseite konkav ausgebildet ist.

9. Bearbeitungsbehälter (1) für Nahrungsmittel nach einem der vorangehenden Ansprüche,
**dadurch gekennzeichnet,**
**daß** der Kolben (9) aus einem geeigneten thermoplastischen Kunststoff hergestellt ist.
